# EUROPEAN PATENT SPECIFICATION

(11) **EP 0 361 215 B1**
(45) Date of publication and mention of the grant of the patent: **30.03.1994**
(21) Application number: 89116988.0
(22) Date of filing: 13.09.1989
(51) Int. Cl.: C09J 7/02

(54) **Dry transferable pressure-sensitive adhesive film**
Trocken übertragbarer, druckempfindlicher Klebstoffilm
Film auto-adhésif transferable à sec

(30) Priority: 26.09.1988 DE 3832662
(43) Date of publication of application: 04.04.1990
(73) Proprietor: MINNESOTA MINING AND MANUFACTURING COMPANY, St. Paul, Minnesota 55133-3427 (US)
(72) Inventor: Kreckel, Karl W. c/o Minnesota Mining and, St. Paul Minnesota 55144-1000 (US)
(74) Representative: Ruschke, Olaf, Dipl.-Ing.

(56) References cited:
- EP-A- 0 252 712
- GB-A- 2 181 992
- US-A- 3 509 991
- US-H- 377

## Description

The invention deals with a dry transferable pressure-sensitive adhesive film placed on one side of at least one backing material, capable of remaining on a substrate as an adherent surface film after pressing the backing and film onto the substrate and peeling the backing material from the deposited adhesive film.

A known dry transferable pressure-sensitive adhesive film of this kind, is rolled together with its backing material attached to one of its sides, to form a roll, which can be applied by using a conventional hand-held dispenser (U.S. Patent No. 3 902 956). Usually, the roll is mounted on a core, which fits into the hand-held dispenser, and which is considered a disposable waste material after the adhesive roll has been consumed.

This dry transferable pressure-sensitive adhesive film in the form of rolls has the disadvantage, that always a special applicator device is needed, such as a hand-held dispenser, which requires an expert loading of the roll and also an expert handling during the application, which presents, however, a problem for many users. Furthermore, in addition to the backing material peeled off from the adhesive film, the core piece carrying the adhesive film roll, is also generated as a waste material. Furthermore, if applying the adhesive film by means of the hand-held dispenser, only rectangular or squared adherent areas are obtainable on the substrate, due to the rolled up tape-shaped form of the adhesive film.

For obtaining adherent areas on a substrate, the use of liquid adhesives has also been known, whereby these adhesives often contain 70 to 80 % solvents. In this case, the disadvantage is seen in the fact, that at the one hand, a drying time is needed, and at the other hand, the formation of a thin and uniform adhesive film on the substrate, is difficult.

Furthermore, a strippable film for adhesive coating and laminating has been known (EP-A-0-252 712) which comprises a base paper and an extrusion coated thermoplastic resin layer. The film has the property that upon coating an adhesive onto the resin layer and assembling the adhesive coated strippable film with a base member, the base paper can be stripped from said resin layer and the resin layer can be subsequently stripped from the adhesive coating. Such a laminate can be wound up and stored in the form of a roll.

A structure using a plastic film coated paper which is release coated on both sides with release agent and which has different release values on each side has been described in U.S. Patent No. 3 509 991. Such a release structure is stored in roll form.

It has also been known to use a bothsided coated adhesive tape (U.S. Patent No. 2 030 135) covered by a backing substrate, whereby adhesive-free edges are provided on each side of the tape for facilitating the handling of the tape. After peeling off the backing tape from the one side, the adhesive tape can be attached on a substrate surface, and after peeling off the other backing tape, an adherent surface area is obtained for the attachment of an object.

Furthermore, a cushion-like arrangement of adhesive tapes has been known (U.S. Patent No. 2 574 152), whereby a plurality of double-coated tapes, coated with different types of adhesives, are stacked and provided with adhesive-free strips for facilitating the handling of the tape. The adhesive layer on one of the side of the tape consists of a normally non-tacky but transferable adhesive layer. If applied, these adhesive films have a high adhesive add-on and besides, they are substantially more expensive to produce.

Another cushion-like arrangement of stacked films has been described in U.S. Patent No. 3 785 102, whereby films are coated with an adhesive on the upper side to serve as a quickly renewable door mat element, since dirt and dust will adhere to the adhesive layer of the particular film at the top and the dirty film can be readily peeled off from the stack of films. The lowest film of the stack has also an adhesive layer at the bottom side for permitting a fastening to the floor or an underlay.

Furthermore, a pad of stacked sheets to write on has been known (U.S. Patent No. 4 590 109), which are removably attached to each other by a strip of an adhesive layer coated on the back side of the sheets, whereby after a separation from the pad, the sheets can be removably attached to a substrate surface.

Finally, spray adhesives have also been known, whereby the adhesive may indeed be uniformly coated as a thin layer. However, the dangerous propellant gases and the health hazards, due to the finely dispersed particles of the adhesive and solvent in the atmospheric air, present a serious disadvantage.

The objectives to be achieved by the present invention deal with the development of a dry transferable pressure-sensitive adhesive film of the aforementioned kind, by which adherent surfaces can be simply formed on any shapes of a substrate as very thin and uniform adhesive layers. At the same time, the additional waste is to be avoided, as obtained with the disposable core in the case of the known dry transferable adhesive films in the form of rolls.

These objectives have been achieved according to the invention by using an adhesive film arranged to form a pad in layers of any areal shapes, and is placed always with his upper side on the bottom side of each of the plurality of backing sheets, which have the same shape and are stacked on top of each other and bothsided but differently adhesion-release treated, whereby the bottom side has a relatively high adhesive strength value and whereby the bottom side of the adhesive film is in contact with the upper side of the stacked backing sheets having a lesser adhesive strength value, and with a surface of the base sheet of the pad, whereby the areal dimensions of the stacked backing sheets are in each case larger than the overall dimensions of the adhesive film layers in the pad, and whereby each backing sheet is provided with at least one adhesive-free area.

Advantageous variants of the dry transferable pressure-sensitive adhesive films according to the invention, are specified in the patent claims 2 to 12.

Most suitably, the adhesive film has the same areal shape in each of the stacked layers of the pad. The adhesive strength value at the side of the backing sheets, on which the adhesive film is coated, is larger than the adhesive strength value at the opposite side of the backing sheet. On each side of the backing sheet, two adhesive-free areas may be provided extending in parallel to each other from one edge of the backing sheet to the other, separated from each other by the particular layer of the adhesive film. The adhesive film may be stamped out in any desired areal shape from a layer of the pad.

On each side of each backing sheet, a plurality of adhesive-free areas may be present, forming stays or areas aligned in the direction of the stacked sheets, whereby each area is surrounded by a plurality of accordingly shaped adhesive film sections. The chemical composition of the adhesive film may be chosen as desired.

The dry transferable pressure-sensitive adhesive film according to the invention, readily permits the formation of adherent surfaces on substrates of any shape, whereby this adhesive layer will be uniformly applied on this substrate as a thin layer. Except for the peeled off backing material, no further waste will be generated. A hand-held dispenser, which is complicated to load and handle, is not needed anymore. Furthermore, a much larger area of any desired shape can be rendered adherent in a single working step than previously obtainable by using the conventional hand-held dispenser, by which only an adhering of rectangular areas of a constant width is possible. Now, a user may, for instance, cut oval, round, triangular, or any other shaped adhesive film parts from the purchased pad. Due to the adhesive-free areas on one or both sides of each backing sheet, these sheets can be conveniently handled. All conventional pressure-sensitive adhesives are applicable, which means, the properties may range from an easy re-separation to a permanent adhesive bond. Only the physical strength has to be sufficiently high to permit a transfer of the film. It is also important, that the backing substrates or release papers, respectively, are sufficiently resistant to moisture and exhibit the release properties required for the pressure-sensitive adhesive.

Even after a long storage, the adhesive film is dry-transferable without problems onto a substrate and the backing material is readily peelable from the deposited adhesive film.

Normally, the separation of individual sheets in a pad-like arrangement of the said kind, will present problems, if the adhesive coating on paper backings is in the range from 30 to 50 g/m², since the too thick adhesive layers may result in a pulling of adhesive strings, in particular at the edges of the individual sheets or at the substrate. Due to a creeping of the cold adhesive adjacent to the edges of the backing sheet not covered by adhesion release agent, a relatively thick adhesive film will result in the formation of a pad during the cutting of a pattern. These problems will surprisingly not occur with the dry transferable adhesive film according to the invention, since the adhesive film needs only to be present as a very thin layer. The add-on weight of the adhesive coating is preferably less than 20 g/m². This means, that the adhesive film is so thin, that a pulling of adhesive strings, in particular at the edges of the backing material, will not occur.

The number of the backing sheets stacked on top of each other in the form of a pad, may be selected as desired and depend only on the desired thickness of the pad. For reasons of a dimensional stability, the pad is preferably provided at the bottom side with a reinforced adhesion-release treated paper or cardboard, whereby also the adhesive film layer at the lowest backing sheet is to be protected from being soiled.

The base sheet at the bottom of the pad may consist of a polyethylene coated paper. The coating of the dry transferable pressure-sensitive adhesive film onto the backing sheet, may be carried out by hot-melt coating procedures or by coating methods employing a solvent. The adhesive film according to the invention exhibits a good storability, a sufficient flexibility during its applications, and can be easily, fast and accurately handled and be placed with a good adhesion in particular on wood, plastics, leather, paper, glass, metal, textile products and painted surfaces. The use is particularly preferred in schools, offices, households when working on decoration projects, in graphic and photographic fields and in the case of art exhibitions.

The invention may also particularly advantageously be applied as a tool in industrial preparations, where the covering or adhering of complicately shaped surface patterns containing openings of various shapes is desired. For instance, the invention may advantageously be applied during the manufacture of various kinds of equipment, where casings or other surfaces with perforations, bore holes or the like, have to be marked by identification symbols of control and operating elements, e.g., in the case of radio sets, television sets, videorecorders, etc.

### Brief Description Of The Drawings

The dry transferable pressure-sensitive adhesive film according to the invention, shall be further explained by referring to the attached drawings:
FIG. 1 is a schematic sectional view of the arrangement of the adhesive film.
FIG. 2 is a top view of a side of a backing material containing a strip-like arrangement of the adhesive film.
FIG. 3 is a top view of a circular backing material.
FIG. 4 is a top view of a differently shaped backing material with two holes.
FIG. 5 is a top view of a backing material, on which the central area is full-areally coated with the adhesive film.
FIG. 6 is a top view of a backing material fitted with finger-grip flaps for a better handling.

### Detailed Description

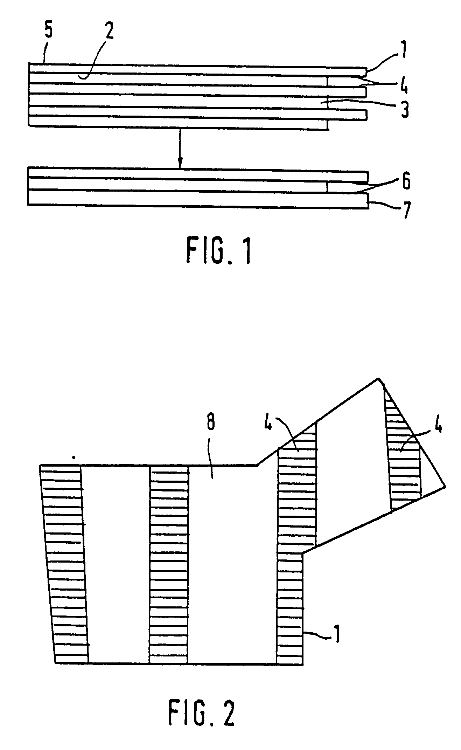

As shown in FIG. 1, a plurality of rectangular bothsided but differently adhesion-release coated, e.g., silicone-coated backing sheets 1, are stacked on top of each other to form a pad. Each backing sheet 1 carries at its bottom side, which has a lesser adhesion releasing layer 2, a layer of a dry transferable pressure-sensitive adhesive film 3, which is arranged in such a way, that adhesive-free areas 4 are formed on one (or several) side(s) of the backing sheet 1, preferably extending in parallel to each other from one edge to the other edge of the backing sheet 1 to permit a convenient handling of each backing sheet 1. The upper side of each backing sheet 1 has a stronger adhesion release layer 5 and, therefore, an adhesive strength value, which is smaller than the adhesive strength at the bottom side 2 of the backing sheet 1. The ratio of the two adhesive strength values may be in the range from 1:1.2 to 1:50, preferably from 1:2 to 1:5.

At the bottom part, the pad is provided with a stiffened base sheet 7 coated at the upper side 6 with an adhesion release agent. The dry transferable pressure-sensitive adhesive film 3 at the bottom side 2 of each backing sheet 1, is in contact with the upper side 5 of the adjacent backing sheet 1 in the pad as well as with the stronger adhesion-releasing, e.g., silicone-coated surface 6, of the base sheet 7.

If using the dry transferable pressure-sensitive adhesive film 3, the most upper backing sheet 1 is grasped by hand at the adhesive-free areas 4, and pressed with the adhesive film 3 at its bottom side 2 onto a substrate. Then, the backing sheet 1 is peeled off from the deposited adhesive film 3 and a desired adherent area remains behind on the substrate.

As seen in FIG. 2, the adhesive film 3 may be coated in the areas 8 on the side 2 of the backing sheet exhibiting a relatively high adhesive strength value, thereby forming a plurality of adhesive-free areas 4. The backing sheet illustrated in FIG. 2 has an areal shape deviating from the rectangular shape.

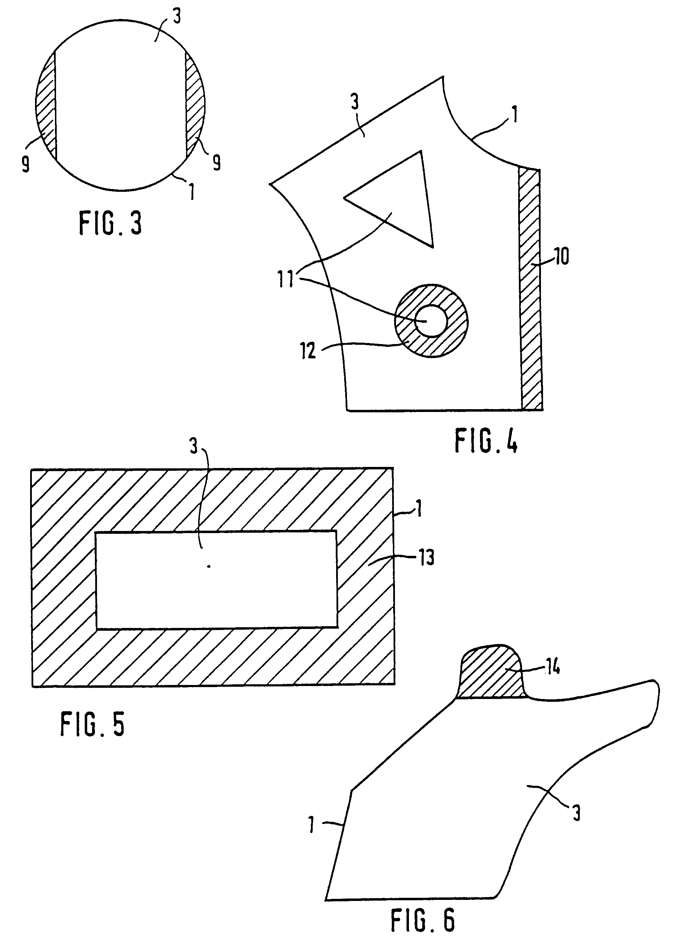

As shown in FIG. 3, the adhesive film 3 may also be attached to a circularly round backing sheet 1, provided with adhesive-free areas 9 at one or several places for permitting a handling. Of course, the backing sheet 1 may also have an elliptic or rhombic shape or any other geometric shape.

As seen in FIG. 4, the backing sheet 1 with the adhesive film 3 may have a shape as needed for the particular shape of the substrate surface. The particular form of execution shown in FIG. 4, has an adhesive-free area 10 for a better handling at the right edge of the backing sheet 1 and two holes 11 of different geometric shapes in the adhesive film 3 and the backing sheet 1. Preferably, only the edge of a hole may be provided with an adhesive-free area 12 for a better handling.

Another preferred form of execution of the invention is shown in FIG. 5, where the adhesive film 3 is full-areally applied in the central area by means of screen printing and the adhesive-free area 13 for a handling is provided at the edges.

Another form of execution is shown in FIG. 6. A suitably shaped backing sheet 1 with the adhesive film 3 is shown, whereby an adhesive-free area 14 in the form of a finger-grip large flap, is provided for a better handling.

In the following, examples shall be presented for describing the structure and the composition of the invention.

### Example 1

- Backing:: 85 g/m² polypropylene film bothsided silicone-coated with different adhesion release values
- Adhesive:: Synthetic rubber/resin
35 weight % styrene/isoprene rubber
45 weight % hydrocarbon resin
19.2 weight % α-pinene polymer
0.8 weight % anti-aging agent
Hot-melt adhesive without solvent
- Adhesive coating:: 20 g/m²
- Dimensions of pad:: 5 cm x 10 cm
- Number of sheets:: 30
- Handling grip area:: Bothsided, width: 1.3 cm
- Base sheet:: Polyethylene coated paper, thickness: 120 µm

### Example 2

- Backing:: 90 g/m² super calendered paper bothsided silicone-coated with different adhesion release values
- Adhesive:: 89 weight % isooctyl acrylate
6 weight % acrylic acid
5 weight % polystyrene with acrylate
Solids: 47%
Solvents: 70:30 toluene/ethyl acetate
- Adhesive coating:: 10 g/m²
- Dimensions of pad:: 10 cm x 10 cm
- Number of sheets:: 40
- Handling grip area:: Bothsided, width 1.5 cm
- Base sheet:: Polyethylene coated paper, thickness: 150 µm

## Claims

1. A dry transferable pressure-sensitive adhesive film placed on one side of at least one backing material, capable of remaining on a substrate as an adherent surface film after pressing the backing and film onto the substrate and peeling the backing material from the deposited adhesive film, characterized in that the adhesive film (3) is arranged to form a pad in layers of any areal shapes, and is placed always with his upper side on the bottom side (2) of each of the plurality of backing sheets (1), which have the same shape and are stacked on top of each other and bothsided but differently adhesion-release treated, whereby the bottom side (2) has a relatively high adhesive strength value and whereby the bottom side of the adhesive film (3) is in contact with the upper side (5) of the stacked backing sheets (1) having a lesser adhesive strength value, and with a surface (6) of the base sheet (7) of the pad, whereby the areal dimensions of the stacked backing sheets (1) are in each case larger than the overall dimensions of the adhesive film layers (3) in the pad, and whereby each backing sheet (1) is provided with at least one adhesive-free area (4).

2. An adhesive film according to claim 1, characterized in that the adhesive film (3) has in each layer of the stack the same areal shape.

3. An adhesive film according to claim 1, characterized in that the stacked, bothsided but differently adhesion-release treated backing sheets (1), are moisture resistant.

4. An adhesive film according to claim 1, characterized in that the ratio of the adhesive strength value of the upper side (5) of each backing sheet (1) to the adhesion strength value of the bottom side (2) of each backing sheet (1), on which the adhesive film (3) is applied, is in the range from 1 : 1.2 to 1 : 50.

5. An adhesive film according to claim 4, characterized in that the ratio of the adhesion strength value, is in the range from 1 : 2 to 1 : 5.

6. An adhesive film according to claim 1, characterized in that two adhesive-free areas (4) extending in parallel to each other from one edge to the opposite edge of the backing sheet (1), are provided on each side (2, 5) of each backing sheet (1), whereby the adhesive-free areas (4) are separated from each other by adhesive film layers (3).

7. An adhesive film according to claim 1, characterized in that a plurality of adhesive-free stays or areas (4), aligned in the direction of the stack, is provided on each side (2, 5) of each backing sheet (1), whereby each of the adhesive-free area (4) is surrounded by a plurality of accordingly shaped adhesive film parts (8).

8. An adhesive film according to claim 1, characterized in that each backing sheet (1) and each adhesive film (3) are fitted with at least one hole (11) of a suitable geometric shape at locations according to the particular application.

9. An adhesive film according to claim 8, characterized in that the edge area of one or several holes (11) are formed as adhesive-free areas (4) aligned in the stacking direction of the backing sheets (1).

10. An adhesive film according to claim 1, characterized in that the adhesive-free areas (4) aligned in the stacking direction of the backing sheets (1) will be partly or completely surrounded by the adhesive film areas (3).

11. An adhesive film according to claim 1, characterized in that the adhesive-free areas (4) aligned in the stacking direction, are formed as finger-grip size extending flaps.

12. An adhesive film according to claim 1, characterized in that the adhesive coating on the backing sheet material is less than 20 g/m².

## Patentansprüche

1. Trocken übertragbarer, druckempfindlicher Klebstofffilm, der auf einer Seite mindestens eines Trägers vorgesehen ist, und nach Aufdrücken des Trägers auf eine Unterfläche und Abziehen des Trägers von ihm auf der Unterlage als klebende Fläche zurückbleibt, dadurch gekennzeichnet, daß der Klebstofffilm (3) eine Blockform bildend in Lagen mindestens eines beliebigen Grundrisses stets auf einer einen verhältnismäßig hohen Klebkrafttrennwert aufweisenden Seite (2) einer Vielzahl übereinander gestapelter beidseitig unterschiedlich klebkraftabweisender Träger (1), die untereinander gleichen Grundriß aufweisen, aufgebracht ist, und jeweils mit der anderen klebkraftabweisenden, einen geringeren Klebkrafttrennwert aufweisenden Seite (5) des in der Blckform benachbarten Trägers (1) sowie mit einer Öberfläche (6) einer den Block flächenmäßig abschließenden Unterlage (7) in Berührung steht, wobei der Grundriß der übereinandergestapelten Träger (1) stets größer als die in einer Lage der Blockform gebildete Gesamtfläche des Klebstoffilms (3) ist und mindestens eine klebestoffreie Fläche (4) auf jedem Träger (1) gegeben ist.

2. Klebstoffilm nach Anspruch 1, dadurch gekennzeichnet, daß der Klebstoffilm (3) in jeder Lage der Blockform die gleiche Grundrißfläche aufweist.

3. Klebstoffilm nach Anspruch 1 dadurch gekennzeichnet, daß die übereinander gestapelten, beidseitig unterschiedlich klebkraftabweisenden Träger (1) feuchtigkeitsbeständig sind.

4. Klebstoffilm nach Anspruch 1 dadurch gekennzeichnet, daß das Verhältnis des Klebkrafttrennwerts der Schicht (5) jedes Trägers (1), zu dem Klebkrafttrennwert der gegenüberliegenden Schicht (2) jedes Trägers (1) auf der der Klebstoffilm (3) aufgetragen ist, in dem Bereich 1:1,2 bis 1:50 liegt.

5. Klebstoffilm nach Anspruch 4, dadurch gekennzeichnet, daß das Verhältnis der Klebstofftrennwerte in dem Bereich 1:2 bis 1:5 liegt.

6. Klebstoffilm nach Anspruch 1, dadurch gekennzeichnet, daß auf jeder Seite (2, 5) jedes Trägers (1) zwei sich parallel zueinander gegenüberliegenden Kanten des Trägers (1) erstreckende, klebstofffreie Flächen (4) vorgesehen sind, die durch die jeweilige Klebstoffilmlage (3) voneinander getrennt sind.

7. Klebstoffilm nach Anspruch 1, dadurch gekennzeichnet, daß auf jeder Seite (2, 5) jedes Trägers (1) eine Vielzahl klebstofffreier, sich in Stapelrichtung der Träger deckender Stege oder Flächen (4) vorgesehen sind, die jeweils eine Vielzahl Klebstoff-Filmteile (8) entsprechender Grundrißform begrenzen.

8. Klebstoffilm nach Anspruch 1, dadurch gekennzeichnet, daß jeder Träger (1) und jeder Klebstoffilm (3) an den an die jeweilige Anwendung angepaßten Stellen mindestens ein Loch (11) angepaßter geometrischer Gestalt aufweist.

9. Klebstoffilm nach Anspruch 8, dadurch gekennzeichnet, daß der Randbereich eines oder mehrer Löcher (11) als klebstoff-freie, sich in Stapelrichtung der Träger (1) deckende Flächen (4) ausgebildet ist.

10. Klebstoffilm nach Anspruch 1, dadurch gekennzeichnet, daß die klebstoff-freien, sich in Stapelrichtung der Träger (1) deckenden Flächen (4) den Klebstoffilm (3) teilweise oder ganz umschließen.

11. Klebstoffilm nach Anspruch 1, dadurch gekennzeichnet, daß die klebstoff-freien, sich in Stapelrichtung der Träger (1) deckenden Flächen (4) als fingergriffgroße Vorsprünge gestaltet sind.

12. Klebstoffilm nach Anspruch 1, dadurch gekennzeichnet, daß die Klebstoffbeschichtung auf den Träger weniger als 20 g/m² beträgt.

## Revendications

1. Film adhésif sensible à la pression et transférable à sec placé sur une face d'au moins un matériau support, capable de rester sur un substrat sous la forme d'un film de surface adhésif après pressage du support et du film sur le substrat et décollement du matériau support du film adhésif déposé, caractérisé en ce que le film adhésif (3) est agencé pour constituer un bloc en couches de contour de surface quelconque, et il est toujours placé avec sa face supérieure contre la face inférieure (2) de chacune de la pluralité de feuilles porteuses (1) , qui ont la même configuration et sont empilées les unes sur les autres et revêtues sur les deux faces avec un agent anti-adhérence mais de propriétés différentes, de sorte que la face inférieure (2) possède une force d'adhérence relativement élevée et que la face inférieure du film adhésif (3) est en contact avec la face supérieure (5) des feuilles porteuses empilées (1) qui possède une force d'adhérence plus faible, et avec une surface (6) de la feuille de base (7) du bloc, les dimensions de surface des feuilles porteuses empilées (1) étant dans chaque cas plus grandes que les dimensions générales des couches de film adhésif (3) dans le bloc et chaque feuille porteuse (1) présentant au moins une région sans adhésif (4).

2. Film adhésif suivant la revendication 1, caractérisé en ce que le film adhésif (3) présente, dans chaque couche de la pile, le même contour de surface.

3. Film adhésif suivant la revendication 1, caractérisé en ce que les feuilles porteuses (1), traitées sur les deux faces mais de façon différente avec un agent anti-adhérence, résistent à l'humidité.

4. Film adhésif suivant la revendication 1, caractérisé en ce que le rapport de la force d'adhérence de la face supérieure (5) de chaque feuille porteuse (1) à la force d'adhérence de la face inférieure (2) de chaque feuille porteuse (1), sur laquelle le film adhésif (3) est appliqué, est compris entre 1:1,2 et 1:50.

5. Film adhésif suivant la revendication 4, caractérisé en ce que le rapport des forces d'adhérence est compris entre 1:2 et 1:5.

6. Film adhésif suivant la revendication 1, caractérisé en ce que deux régions sans adhésif (4) s'étendant parallèlement l'une à l'autre, d'un bord au bord opposé de la feuille porteuse (1), sont prévues sur chaque face (2,5) de chaque feuille porteuse (1), les régions sans adhésif (4) étant séparées l'une de l'autre par des couches de film adhésif (3).

7. Film adhésif suivant la revendication 1, caractérisé en ce qu'une pluralité de plages ou régions sans adhésif (4), alignées dans la direction d'empilage, sont prévues sur chaque face (2,5) de chaque feuille porteuse (1), de sorte que chacune des régions sans adhésif (4) est entourée par une pluralité de parties de film adhésif de configuration correspondante (8).

8. Film adhésif suivant la revendication 1, caractérisé en ce que chaque feuille porteuse (1) et chaque film adhésif (3) comportent au moins un trou (11) de forme géométrique désirée, à certains endroits, en fonction de l'application particulière.

9. Film adhésif suivant la revendication 8, caractérisé en ce que la région de bord d'un ou plusieurs trous (11) constituent des régions sans adhésif (4) alignées dans la direction d'empilage des feuilles porteuses (1).

10. Film adhésif suivant la revendication 1, caractérisé en ce que les régions sans adhésif (4) alignées dans la direction d'empilage des feuilles porteuses (1) sont partiellement ou complètement entourées par les régions de film adhésif (3).

11. Film adhésif suivant la revendication 1, caractérisé en ce que les régions sans adhésif (4) alignées dans la direction d'empilage sont sous la forme de languettes ayant une dimension qui permet une prise avec les doigts.

12. Film adhésif suivant la revendication 1, caractérisé en ce que le revêtement adhésif sur la feuille porteuse est inférieur à 20 g/m².
